# EUROPÄISCHE PATENTSCHRIFT

(11) **EP 2 092 397 B1**
(45) Veröffentlichungstag und Bekanntmachung des Hinweises auf die Patenterteilung: **02.11.2011**
(21) Anmeldenummer: 07847177.8
(22) Anmeldetag: 15.11.2007
(51) Int. Cl.: G05B 19/042, G08C 19/02

(54) **SIGNALTRENNEINHEIT FÜR EINE ZWEI-LEITER-PROZESSREGELSCHLEIFE**
SIGNAL ISOLATION UNIT FOR A DUAL-CONDUCTOR PROCESS CONTROL LOOP
UNITÉ DE SÉPARATION DE SIGNAUX POUR BOUCLE DE RÉGULATION DE PROCESSUS À DEUX CONDUCTEURS

(30) Priorität: 22.11.2006 DE 102006055396
(43) Veröffentlichungstag der Anmeldung: 26.08.2009
(73) Patentinhaber: Endress+Hauser Wetzer GmbH+CO. KG, 87484 Nesselwang (DE); Endress+Hauser (Deutschland) AG+Co. KG, 79576 Weil am Rhein (DE)
(72) Erfinder: WÖHRLE, Markus, 87637 Eisenberg (DE)
(74) Vertreter: Andres, Angelika Maria
(86) Internationale Anmeldenummer: PCT/EP2007/062400
(87) Internationale Veröffentlichungsnummer: WO 2008/061935

(56) Entgegenhaltungen:
- EP-A- 0 809 222
- WO-A-2006/106055
- DE-A1- 2 342 294
- US-A- 5 469 746
- SCHOLZ W ET AL: "INTERKAMA '92: INTELLIGENTE MESSUMFORMER FUER DIE PROZESSMESSTECHNIK. ÖINTERKAMA '92: INTELLIGENT TRANSMITTERS FOR PROCESS MEASUREMENT" TECHNISCHES MESSEN TM, R.OLDENBOURG VERLAG. MUNCHEN, DE, Bd. 60, Nr. 4, 1. April 1993 (1993-04-01), Seiten 157-161, XP000359605 ISSN: 0171-8096
- MUELLER W: "DAS HART-FELD-KOMMUNIKATIONS-PROTOKOLL" AUTOMATISIERUNGSTECHNISCHE PRAXIS - ATP, OLDENBOURG INDUSTRIEVERLAG, MUNCHEN, DE, Bd. 34, Nr. 9, 1. September 1992 (1992-09-01), Seiten 518-520,521, XP000311930 ISSN: 0178-2320

## Beschreibung

Die Erfindung betrifft eine Signaltrenneinheit für eine Zwei-Leiter-Prozessregelschleife gemäß dem Oberbegriff des Anspruchs 1.

In der Prozessautomatisierungstechnik werden vielfach Feldgeräte eingesetzt, die über eine Zwei-Leiter-Prozessregelschleife mit einer übergeordneten Einheit verbunden sind. Feldgeräte dienen allgemein zur Erfassung und/oder Beeinflussung von Prozessvariablen. Beispiele für derartige Feldgeräte sind Füllstandsmessgeräte, Massedurchflussmessgeräte, Druck- und Temperaturmessgeräte, pH-Redoxpotential-Messgeräte, Leitfähigkeitsmessgeräte, etc., die als Sensoren die entsprechenden Prozessvariablen Füllstand, Durchfluss, Druck, Temperatur, pH-Wert, bzw. Leitfähigkeitswerte erfassen.

Zur Beeinflussung von Prozessvariablen dienen so genannte Aktoren, wie zum Beispiel Ventile, die es ermöglichen, den Durchfluss einer Flüssigkeit in einem Rohrleitungsabschnitt zu verändern.

Eine Vielzahl solcher Feldgeräte wird von der Firma Endress+Hauser hergestellt und vertrieben.

Die Signalübertragung zwischen Feldgeräten und übergeordneten Einheiten erfolgt häufig nach dem bekannten 4-20 mA-Standard.

Handelt es sich bei den Feldgeräten um Sensoren, so werden die Messwerte als 4-20 mA Stromsignale über die Zwei-Leiter-Prozessregelschleife an die übergeordnete Einheit übertragen. Der Messbereich der einzelnen Sensoren wird dabei linear auf das 4-20 mA-Stromsignal abgebildet. Die Sensoren dienen als Sender für die Messwerte, die Steuereinheit als Empfänger der Messwerte. Die übergeordnete Einheit steuert in der Regel den Prozess. Hierfür werden die Messwerte der Sensoren ausgewertet und Steuersignale für die Aktoren generiert.

Vielfach erfolgt die Energieversorgung der Feldgeräte auch über das 4-20 mA-Stromsignal, so dass keine zusätzlichen Versorgungsleitungen notwendig sind.

Beim Einsatz von Feldgeräten im Ex-Bereich sind gewisse Maßnahmen im Hinblick auf die entsprechenden Ex-Schutzbestimmungen notwendig. Häufig ist eine galvanische Trennung zwischen Feldgerät und übergeordneter Einheit notwendig. Hierzu werden spezielle Signaltrenneinheiten für Zwei-Leiter-Prozessregelschleifen eingesetzt, die zur galvanischen Isolierung der sensorseitigen Signale von den steuereinheitseitigen Signalen dienen.

Eine einfache Möglichkeit eine solche galvanische Trennung zu realisieren, besteht darin, eine Trenneinheit einzusetzen, die einen Transformator, Gleichrichter sowie eine Zerhacker aufweist. Solche Trenneinheiten arbeiten rein passiv und haben keine Anzeigemöglichkeit.

Für die sensornahe Darstellung von Sensorzuständen sowie allgemeinen Sensorinformationen sind entsprechende Monitoreinheiten bekannt. Diese Monitoreinheiten werden mit der Zwei-Leiter-Prozessregelschleife verbunden und werten häufig die über die Zwei-Leiter-Prozessregelschleife übertragenen digitalen Signale (HART-Signale) aus. Solche Monitoreinheiten sind schaltungstechnisch meist sehr aufwendig und benötigen entsprechend viel Energie. Deshalb ist für diese Geräte eine separate Spannungsversorgung mit einem entsprechenden Verkabelungsaufwand notwendig.

Die WO 2006/106055 zeigt ein Messunformerspeiregerät for die Prozess automatisserungs- technich, das zur Eingieversorgung eines Messumformers und zur Weiterleitung von Stromsignalen zwischen dem Messumformer und einer übergeordneten Einheit über eine Signalleitung dient, wobei im Messumformerspeisegerät zusätzlich ein über ein Modem angeschlossener Mikrocontroller und eine vom Mikrocontroller angesteuerte Signalisierungseinrichtung angeordnet sind.

Aufgabe der Erfindung ist es, eine Signaltrenneinheit für eine Zwei-Leiter-Prozessregelschleife anzugeben, die eine sensornahe Signalisierung von Sensorzuständen erlaubt und die keine aufwendige Verkabelung benötigt.

Gelöst wird diese Aufgabe durch die im Anspruch 1 angegebenen Merkmale.

Die wesentliche Idee der Erfindung besteht darin, in der Signaltrenneinheit seriell zur Zwei-Leiter-Prozessregelschleife eine Energieversorgungseinheit und parallel zur Zwei-Leiter-Prozessregelschleife eine Kommunikationseinheit anzuordnen. Mit der Energieversorgungseinheit und der Kommunikationseinheit ist ein Mikrocontroller verbunden, an den ein Relais angeschlossen ist. Dadurch ist eine sensornahe Auswertung von Sensordaten und eine entsprechende Signalisierung von Sensorzuständen möglich.

Bei einer vorteilhaften Ausgestaltung der Erfindung handelt es sich bei der Zwei-Leiter-Prozessregelschleife um eine 4-20 mA-Regelschleife.

In einer weiteren vorteilhaften Ausgestaltung der Erfindung erfolgt die Kommunikation über die Regelschleife nach dem HART-Standard. Als Kommunikationseinheit kann in diesem Fall ein herkömmliches HART-Modem eingesetzt werden.

In einer Weiterentwicklung der Erfindung ist die Energieversorgungseinheit als DC-DC Wandler ausgebildet.

In einer weiteren vorteilhaften Ausgestaltung der Erfindung ist zur galvanischen Trennung ein Transformator, dem stromausgangsseitig ein Zerhacker und stromeingangsseitig ein Gleichrichter vorgeschaltet ist, vorgesehen.

Nachfolgend ist die Erfindung anhand eines in der Zeichnung dargestellten Ausführungsbeispiels näher erläutert.

Es zeigen:

Fig. 1 Blockschaltbild einer Signaltrenneinheit für eine Zwei-Leiter-Prozessregelschleife nach dem Stand der Technik.

Fig. 2 Blockschaltbild einer Monitoreinheit für eine Zwei-Leiter-Prozessregelschleife nach dem Stand der Technik.

Fig. 3 Blockschaltbild einer erfindungsgemäßen Signaltrenneinheit.

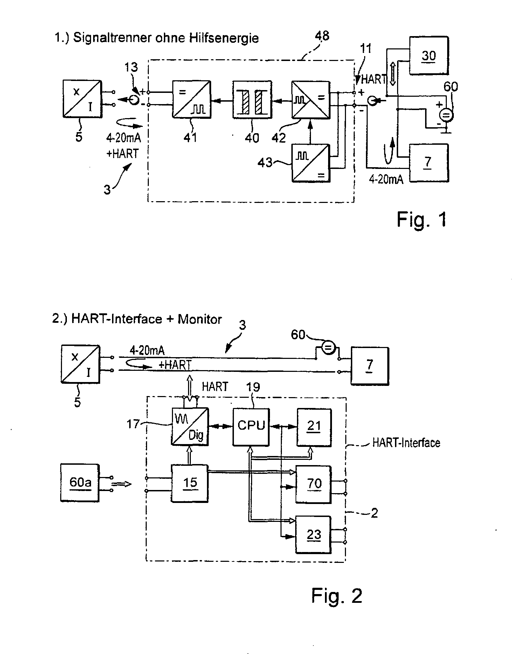

Die in Fig. 1 dargestellte Signaltrenneinheit 1 weist einen Transformator 40 auf, dem ein Zerhacker 42 vorgeschaltet ist. Der Zerhacker 42 wird von einem Oszillator 43 angesteuert. Der Zerhacker 42 besteht im Wesentlichen aus einem Schalttransistor. Zerhacker 42 und Oszillator 43 wandeln den am Stromeingang 11 anliegenden Strom in eine Folge von Strompulsen um. Der gepulste Strom wird über den Transformator 40 übertragen und mit Hilfe eines Gleichrichters 41 wieder in einen Gleichstrom umgewandelt, der am Stromausgang 13 ausgegeben wird.

Gleichrichter 41, Transformator 40, Zerhacker 42 sowie Oszillator 43 bilden ein galvanisches Trennglied.

Mit dem Stromausgang 13 ist ein Messumformer 5 verbunden, der als Sensor z.B. zur Erfassung eines Temperaturwerts dient. Der Temperaturwert wird als 4-20 mA-Signal über die Zwei-Leiter-Prozessregelschleife 3, in der die Signaltrenneinheit 1 angeordnet ist, zu einem Empfänger 7 übertragen. Der Empfänger 7 kann zum Beispiel eine Steuereinheit SPS sein.

Das über die Zwei-Leiter-Prozessregelschleife 3 übertragene Stromsignal wird von einer Energieversorgungseinheit 60 geliefert. Über ein HART-Bediengerät 30 können zusätzlich Parameterwerte aus dem Messumformer 5 ausgelesen bzw. in diesen geschrieben werden. Hierzu wird das HART-Bediengerät 30 kurzfristig mit der Zwei-Leiter-Prozessregelschleife 3 verbunden.

Diese in Figur 1 dargestellte bekannte Signaltrenneinheit 1 dient zum einen zur galvanischen Trennung des analogen Stromsignals, das zwischen dem Sensor 5 und dem Empfänger 7 übertragen wird. Gleichzeitig dient die Signaltrenneinheit 1 natürlich auch zur galvanischen Trennung des zwischen dem Sensor 5 und dem HART-Bediengerät 30 ausgetauschten HART-Signale.

In Fig. 2 ist eine weitere Zwei-Leiter-Prozessregelschleife 3 dargestellt, über die ebenfalls ein Sensor 5 (Meßumformer) mit einem Empfänger 7 verbunden ist. Parallel zur Zwei-Leiter-Prozessregelschleife 3 ist eine Monitoreinheit 2 verbunden. Diese Monitoreinheit 2 wird über eine separate Spannungsversorgungseinheit 60a versorgt. Die Monitoreinheit 2 weist eine Kommunikationseinheit 17 auf, die mit einem Mikrocontroller 19 verbunden ist. Zur Bedienung der Monitoreinheit 2 dient eine Bedieneinheit 21, die ebenfalls mit dem Mikrocontroller 19 verbunden ist. Als Signalausgänge weist die Monitoreinheit 2 einen Stromausgang 70 und ein Relais 23 auf. Die Energieversorgung der einzelnen Komponenten erfolgt über eine Energieversorgungseinheit 15, die mit den einzelnen Komponenten 17, 19, 21, 70 und 23 verbunden ist. Diese Monitoreinheit 2 dient zur prozessnahen Darstellung von Sensorinformationen, sowie zur Grenzwertüberwachung des vom Sensor 5 gelieferten Stromsignals mit Hilfe des Relais bzw. zur Weitergabe bzw. Skalierung des Stromsignals über den Stromausgang

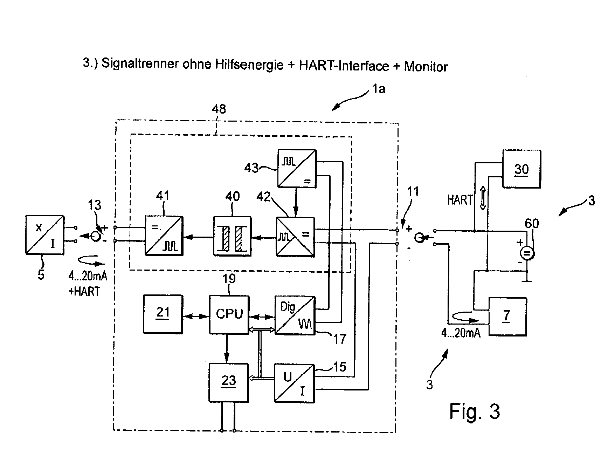

In Fig. 3 ist eine erfindungsgemäße Signaltrenneinheit 1a dargestellt. Funktionseinheiten, die in Fig. 1 bzw. 2 gleiche Aufgaben erfüllen, sind mit gleichen Bezugszeichen versehen. Zur galvanischen Signaltrennung zwischen dem Stromeingang 11 und Stromausgang 13 der Signaltrenneinheit 1 a ist ebenfalls ein Transformator 40 vorgesehen. Dem Transformator ist entsprechend der in Fig. 1 dargestellten Signaltrenneinheit ein Zerhacker 42 und ein Oszillator 43 vorgeschaltet. Ebenfalls ist dem Transformator 40 ein Gleichrichter 41 nachgeschaltet.

Diese 4 Komponenten 40, 41, 42 und 43 bilden ein Trennglied 48.

In Serie zur Zwei-Leiter-Prozessregelschleife 3 ist eine Energieversorgungseinheit 15 geschaltet, die zur Energieversorgung der einzelnen in der Signaltrenneinheit 1a vorgesehenen Funktionskomponenten dient. Weiterhin ist parallel zur Zwei-Leiter-Prozessregelschleife 3 eine Kommunikationseinheit 17 angeordnet, die zum Beispiel als HART-Modem ausgeführt sein kann.

Der Kommunikationseinheit 17 ist ein Mikrocontroller 19 nachgeschaltet, der über eine Bedieneinheit 21 (DIP-Schalter) bedient werden kann. Als Signalausgang ist ein Relais 23 vorgesehen, das vom Mikrocontroller 19 angesteuert wird. Mit dem Stromausgang 13 der erfindungsgemäßen Signaltrenneinheit 1a ist ebenfalls ein Sensor 5 verbunden. Bei dem Sensor 5 kann es sich z.B. um einen Temperaturtransmitter handeln, der den Temperaturwert als 4-20 mA-Signal über die Zwei-Leiter-Prozessregelschleife 3 an den Empfänger 7 (SPS) überträgt. Hierzu ist der Empfänger 7 mit dem Stromeingang 11 verbunden. Zur Erzeugung des 4-20 mA-Signals dient ebenfalls wieder eine Energieversorgungseinheit 60. Zum Konfigurieren und Parametrieren des Messumformers dient ein HART-Bediengerät 30, das kurzfristig mit der Zwei-Leiter-Prozessregelschleife verbunden werden kann. Dieses Bediengerät tauscht digitale Daten über die Zwei-Leiter-Prozessregelschleife 3 mit dem Sensor 5 aus.

Nachfolgend ist die Erfindung näher erläutert. Das Trennglied 48 dient zur galvanischen Isolierung der über die Zwei-Leiter-Prozeßregelschleife 3 übertragenen Stromsignale. Die Stromsignale können dabei analog (4-20mA-Stromsignal) oder auch digital (HART-Signal) sein. Weiterhin dient die Signaltrenneinheit 1a zur sensornahen Darstellung von Sensorzuständen mit Hilfe des Relais 23, das z.B. eine Signallampe ansteuern kann.

Zur Bestimmung des Sensorzustandes wird in der Trenneinheit 1 a, das vom Sensor 5 gelieferte Fielddevice Statusbyte (vergl. HART Specifikation HCF-99 Rev. 8.0 Kap.7.4.3 Field Device Status) ausgewertet. Das Statusbyte besteht aus 8 Bits.

Die einzelnen Bits entsprechen verschiedenen Sensorzuständen.

Der Wert 0x01 des Statusbytes zeigt z. B. an, dass der Hauptmesswert des Sensors 5 außerhalb der vorgegebenen Grenzen liegt. Wenn dieser Sensorzustand vorliegt, überträgt der Sensor 5 als Statusbyte diesen Wert,

Durch Markierung des ersten Bits des Statusbytes kann eine entsprechende Signalisierung einer kritischen Prozesssituation "Hauptmesswert außerhalb der vorgegebenen Grenzen", relativ sensornah erfolgen.

Die Maskierung einzelner Bits kann mit der Bedieneinheit 21 über den DIP-Schalter erfolgen.

Zeigt das Statusbyte keine kritische Situation an oder ist ein entsprechendes Bit nicht maskiert, so wird alternativ das Stromsignal ausgewertet.

Falls das Stromsignal außerhalb einstellbarer Grenzen liegt, kann ebenfalls eine Signalisierung erfolgen.

In vorteilhafter Weise handelt es sich bei der Zwei-Leiter-Stromschleife 3 um eine 4-20 mA Strom-Regelschleife über die HART-Signale übertragen werden. Dadurch kann die Kommunikationseinheit 17 als herkömmliches HART-Modem ausgebildet sein.

In vorteilhafter Weise ist die Energieversorgungseinheit 15 als DC-DC-Wandler ausgestaltet.

Bei der erfindungsgemäßen Signaltrenneinheit standen auch geringe Herstellungskosten im Vordergrund, deshalb werden zur galvanischen Signaltrennung die Komponenten einer an sich bekannten Signaltrenneinheit eingesetzt. Diese bestehen hauptsächlich aus einem Transformator 40, dem stromausgangsseitig ein Zerhacker 42 und stromeingangsseitig ein Gleichrichter 41 vorgeschaltet ist.

Mit der erfindungsgemäßen Signaltrenneinheit 1a ist in einfacher Weise eine galvanische Isolierung und gleichzeitig eine sensornahe Darstellung von Sensorzuständen möglich. Da die Signaltrenneinheit 1 a wenig Energie verbraucht, reicht eine Versorgung über die Zwei-Leiter-Prozessregelschleife 3 aus. Es sind keine zusätzlichen Versorgungsleitungen notwendig.

**Tabelle 1**

| | |
|---|---|
| Signaltrenneinheit | 1 |
| Monitoreinheit | 2 |
| Zwei-Leiter-Prozessregel schleife | 3 |
| Sensor | 5 |
| Empfänger | 7 |
| Stromeingang | 11 |
| Stromausgang | 13 |
| Energieversorgungseinhe it | 15 |
| Kommunikationseinheit | 17 |
| Mikrocontroller | 19 |
| Bedieneinheit | 21 |
| Relais | 23 |
| HART-Bediengerät | 30 |
| Transformator | 40 |
| Gleichrichters | 41 |
| Zerhacker | 42 |
| Oszillator | 43 |
| Trennglied | 48 |
| Energieversorgungseinhe it | 60 |

## Patentansprüche

1. Signaltrenneinheit (1 a) zur Übertragung eines Stromsignals zwischen einem Sender und einem Empfänger (5, 7), wobei die Übertragung des Stromsignals über eine Zwei-Leiter-Prozessregelschleife (3) erfolgt,
mit einem Stromeingang (11) und einem Stromausgang (13), sowie mit einer Energieversorgungseinheit (15), einer Kommunikationseinheit (17) und einem Mikrocontroller (19),
wobei der Stromeingang (11) und der Stromausgang (13) über ein galvanisch isolierendes Trennglied (48) miteinander verbunden sind, wobei das Trennglied (48) zur galvanischen Isolierung des über die Zwei-Leiter-Prozessregelschleife (3) übertragenen Stromsignals dient,
dass die Kommunikationseinheit (17) parallel zum Stromeingang (11) angeordnet ist und zur digitalen Kommunikation über die 2-Leiter-Prozessregelschleife (3) dient, und
dass der Mikrocontroller (19) mit der Energieversorgungseinheit (15) und der Kommunikationseinheit (17) verbunden ist, und
dass an den Mikrocontroller (19) ein Relais (23) zur Signalisierung von Sensorzuständen angeschlossen ist,
dass die Energieversorgungseinheit (15) zur Energieversorgung einzelner Komponenten (40, 41, 42, 43) der Signaltrenneinheit (1a) dient,
**Dadurch gekennzeichnet, dass**
die Energieversorgungseinheit (15) in Serie zum Stromeingang (11) angeordnet ist,
und dass die Versorgung der Signaltrenneinheit (1 a) mit Energie über die Zwei-Leiter-Prozessregelschieife (3) erfolgt.

2. Signaltrenneinheit nach Anspruch 1, **dadurch gekennzeichnet, dass** die Zwei-Leiter-Prozessregelschleife (3) eine 4-20 mA Stromregelschleife ist.

3. Signaltrenneinheit nach Anspruch 2, **dadurch gekennzeichnet, dass** die digitale Kommunikation über die Stromregelschleife (3) nach dem HART-Standard erfolgt und die Kommunikationseinheit (17) ein HART-Modem ist.

4. Signaltrenneinheit nach Anspruch 3, **dadurch gekennzeichnet, dass** die Energieversorgungseinheit (15) ein DC-DC-Wandler ist.

5. Signaltrenneinheit nach einem der vorhergehenden Ansprüche, **dadurch gekennzeichnet, dass** zur galvanischen Isolation ein Transformator (40) vorgesehen ist, dem stromausgangsseitig ein Zerhacker (42) und stromeingangsseitig ein Gleichrichter (41) vorgeschaltet sind.

## Claims

1. Signal isolating unit (1a) for transmitting a current signal between a transmitter and a receiver (5, 7), wherein the current signal is transmitted via a two-wire process control loop (3),
with a current input (11) and a current output (13), and with an power supply unit (15), a communication unit (17) and a microcontroller (19),
wherein the current input (11) and the current output (13) are connected via a galvanically isolating isolator (48), wherein the isolator (48) is used to isolate the current signal transmitted via the two-wire process control loop (3),
wherein the communication unit (17) is arranged parallel to the current input (11) and is used for digital communication via the two-wire process control loop (3), and wherein the microcontroller (19) is connected to the power supply unit (15) and the communication unit (17), and
wherein a relay (23) for signaling the sensor condition is connected to the microcontroller (19),
wherein the power supply unit (15) is used to supply power to individual components (40, 41, 42, 43) of the signal isolating unit (1 a),
**characterized in that**
the power supply unit (15) is arranged in series relative to the current input (11),
and **in that** power is supplied to the signal isolating unit (1a) via the two-wire process control loop (3).

2. Signal isolating unit as claimed in Claim 1, **characterized in that** the two-wire process control loop (3) is a 4-20 mA current control loop.

3. Signal isolating unit as claimed in Claim 2, **characterized in that** digital communication via the current control loop (3) takes places in accordance with the HART standard and the communication unit (17) is a HART modem.

4. Signal isolating unit as claimed in Claim 3, **characterized in that** the power supply unit (15) is a DC-DC converter.

5. Signal isolating unit as claimed in one of the previous claims, **characterized in that** a transformer (40) is provided for galvanic isolation, upstream of which a chopper (42) is provided on the current output side and a rectifier (41) is provided on the current input side.

## Revendications

1. Unité de séparation de signaux (1a) destinée à la transmission d'un signal de courant entre un émetteur et un récepteur (5, 7), la transmission du signal de courant s'effectuant par l'intermédiaire d'une boucle de régulation de process à deux fils (3),
avec une entrée courant (11) et une sortie courant (13), ainsi qu'avec une unité d'alimentation en énergie (15), une unité de communication (17) et un microcontrôleur (19),
l'entrée courant (11) et la sortie courant (13) étant reliées entre elles par l'intermédiaire d'un élément de séparation (48) galvaniquement isolé, l'élément de séparation (48) servant à l'isolation galvanique du signal de courant transmis par le biais de la boucle de régulation de process à deux fils (3),
l'unité de communication (17) étant disposée parallèlement à l'entrée courant (11) et servant à la communication numérique par l'intermédiaire de la boucle de régulation de process à deux fils (3), et
le microcontrôleur (19) étant relié avec l'unité d'alimentation en énergie (15) et avec l'unité de communication (17), et
le microcontrôleur (19) étant relié à un relais (23) destiné à la signalisation d'états de capteur,
l'unité d'alimentation en énergie (15) servant à l'alimentation en énergie de différents composants (40, 41, 42, 43) de l'unité de séparation de signaux (1a),
**caractérisée en ce**
**que** l'unité d'alimentation en énergie (15) est disposée en série avec l'entrée courant (11), et en ce que l'alimentation de l'unité de séparation de signaux (1a) s'effectue avec l'énergie fournie par l'intermédiaire de la boucle de régulation de process à deux fils (3).

2. Unité de séparation de signaux selon la revendication 1, **caractérisée en ce que** la boucle de régulation de process à deux fils (3) est une boucle de régulation de courant 4-20 mA.

3. Unité de séparation de signaux selon la revendication 2, **caractérisée en ce que** la communication numérique s'effectue par l'intermédiaire de la boucle de régulation de process à deux fils (3) d'après la norme HART, et **en ce que** l'unité de communication (17) est un modem HART.

4. Unité de séparation de signaux selon la revendication 3, **caractérisée en ce que** l'unité d'alimentation en énergie (15) est un convertisseur c.c.-c.c.

5. Unité de séparation de signaux selon l'une des revendications précédentes, **caractérisée en ce qu'**est prévu, pour l'isolation galvanique, un transformateur (40), auquel est couplé en amont un hacheur côté sortie courant et un redresseur (41) côté entrée courant.
